## Europäisches Patentamt

## European Patent Office

## Office européen des brevets

(19)

(11) Veröffentlichungsnummer: **0 119 426**
**B1**

# EUROPÄISCHE PATENTSCHRIFT

(12)

(45) Veröffentlichungstag der Patentschrift:
**17.12.86**

(21) Anmeldenummer: **84101201.6**

(22) Anmeldetag: **07.02.84**

(51) Int. Cl.⁴: **C 03 B 37/06, C 03 B 37/08**

(54) **Düsenziehverfahren und Ziehdüse zur Zerteilung von Schmelzen.**

(30) Priorität: **19.02.83 DE 3305810**

(43) Veröffentlichungstag der Anmeldung:
**26.09.84 Patentblatt 84/39**

(45) Bekanntmachung des Hinweises auf die Patenterteilung:
**17.12.86 Patentblatt 86/51**

(84) Benannte Vertragsstaaten:
**AT BE CH DE FR GB IT LI NL SE**

(56) Entgegenhaltungen:
**EP-A-0 081 082**
**DE-A-1 421 680**
**DE-A-3 016 114**
**GB-A-1 114 899**

**Soviet Inventions Illustrated week K 10, 20 April 1983 sections L 02, F 01**

(73) Patentinhaber: **BAYER AG, Konzernverwaltung RP Patentabteilung, D-5090 Leverkusen 1 Bayerwerk (DE)**

(72) Erfinder: **Muschelknautz, Edgar, Prof. Dr., Carl-Rumpff- Strasse 33, D-5090 Leverkusen (DE)**
Erfinder: **Rink, Norbert, Dr., Frixheimerstrasse 60, D-4049 Rommerskirchen (DE)**
Erfinder: **Chalupka, Georg, Carl- Leverkus- Strasse 1a, D-5068 Odenthal (DE)**

EP 0 119 426 B1

LIBER. STOCKHOLM 1986

## Beschreibung

Die vorliegende Erfindung betrifft ein Verfahren zur Zerteilung von Schmelzen nach dem Düsenziehverfahren, bei dem aus an der Unterseite eines die Schmelze enthaltenden Tiegels angeordneten Schmelzeausflußöffnungen unter der Wirkung der Schwerkraft und zusätzlicher Druckkräfte ausfließende Schmelzeströme bei Hindurchtritt durch Ziehdüsen unter der Wirkung von mit hoher Geschwindigkeit im wesentlichen parallel zu den Schmelzeströmen strömenden Gasen zerteilt, ausgezogen und unter die Erstarrungstemperatur abgekühlt werden. Ein solches Verfahren zur Herstellung von Mineralwolle wurde bereits 1922 (DE-PS 429 554) vorgeschlagen.

In der EP-A1- 38 989 wurde nun ein Zerteilungsmechanismus beschrieben, bei dem durch einen möglichst starken Druckgradienten im Ziehdüseneinlauf eine Aufspaltung des Schmelzstromes in eine Vielzahl von Einzelfasern bewirkt wird.

Es wurde nun gefunden, daß der Druckgradient dadurch erhöht werden kann, daß an der Eintrittsöffnung der Ziehduse ein Fluid unter einem Winkel zwischen 50° entgegen demSchmelzestrom (-50°) bis 25° in Richtung des Schmelzestroms ( + 25°) in die Einlaufströmung eingedüst wird.

Vorzugsweise werden die Fluidstrahlen unter einem Winkel von -30° bis 0° gegen die Richtung senkrecht zur Ziehdüsenmittelebene eingeblasen.

Das eingeblasene Fluid trägt zur Erhöhung des Druckgradienten im Düseneinlauf einerseits dadurch bei, daß zusätzlich zu beschleunigende Masse bereitgestellt wird und andererseits, wenn das Fluid in Form feiner Strahlen eingeblasen wird, daß es als Strömungshindernis für die einströmende Umgebungsluft, und damit im Sinne einer Verengung des Einlaufquerschnitts unmittelbar in Düseneingang wirkt.Vorzugsweise wird daher das Fluid in Form feiner Strahlen - nachfolgend Querstrahlen genannt - eingeblasen, wobei die Querstrahlen bis zur Vermischung mit der in die Düse einströmenden Umgebungsluft eine Reichweite aufweisen sollen, die etwa dem Abstand vom Düseneinlauf bis zur Schmelzeausflußöffnung des Tiegels entspricht. Die Querstrahlen sollen vorzugsweise mindestens bis zur Ziehdüsenmitte reichen.

Das Fluid kann im einfachsten Falle ein Gas, z.B. Umgebungsluft, Wasserdampf oder ein Inertgas, wie Stickstoff, sein. Die Zerteilung der Schmelze kann weiter dadurch beeinflußt werden, daß die Querstrahlen durch ein mit dem Umgebungsgas unter Wärmefreisetzung reagierendes Gas erzeugt werden. Zum Beispiel können als Gas für die Querstrahlen Wasserstoff oder Kohlenwasserstoffe eingesetzt werden, die mit dem Sauerstoff der Umgebungsluft verbrennen. Dies kann insbesondere dann von Interesse sein, wenn Schmelzen mit hoher Viskosität, z.B. Glasschmelzen, zerteilt, insbesondere zu Fasern ausgezogen werden sollen. Als Fluid zur Erzeugung der Querstrahlen können aber auch verdampfende Flüssigkeiten, z. B. Wasser, eingesetztwerden. Dies istinsbesondere dann zweckmäßig, wenn eine schnelle Abkühlung der zu zerteilenden Schmelze erforderlich ist, z.B. bei der Zerteilung von Metallschmelzen.

Die Menge des als Querstrahlen eingeblasenen Fluids soll 2 bis 40 Gew.-% des in die Ziehdüse insgesamt eintretenden Gases ausmachen. Vorzugsweise soll die Menge des als Querstrahlen eingeblasenen Gases 5 bis 20 Gew.-% des in die Ziehdüse eintretenden Gases betragen. Wird als Fluid eine Flüssigkeiteingesetzt, soll diese vorzugsweise im Einlauf der Ziehdüse vollständig verdampft werden. Besonders vorteil haft kann ein Flüssigkeits-Gasgemisch eingesetztwerden.

Die Geschwindigkeit der Querstrahlen, ihre Richtung und die Menge des als Querstrahlen eingeblasenen Fluids sowie das Druckgefälle im Ziehdüseneinlauf (wie es sich ohne Querstrahlen ausbilden würde) stehen in einem engen Zusammenhang. Bei Überschallziehdüsen werden vorzugsweise gute Ergebnisse erreicht, wenn die Querstrahlgeschwindigkeit auch im Überschallbereich, z.B. zwischen 1- bis 3-facher Schallgeschwindigkeit liegt. In diesem Fall beträgt das als Querstrahlen eingeblasene Gas besonders bevorzugt 8 bis 16 Gew.-% des in die Ziehdüse insgesamt eintretenden Gases.

Neben der den Ausziehprozeß vorteilhaft beeinflussenden Wirkung im Hinblick auf Erhöhung des Druckgefälles im Düseneinlauf wird mit Hilfe der Querstrahlen auch die Wirtschaftlichkeit des Verfahrens wesentlich verbessert: Die Schmelzeaustrittsöffnungen des Schmelzetiegels können näher an die Oberkante der Ziehdüse herangefahren werden, so daß aufgrund der stärkeren Saugwirkung der Einlaufströmung je Nippel eine größere Schmelzemenge aus dem Tiegel herausfließt. Ferner können die Schmelzeaustrittsöffnungen dichter aneinander angeordnet sein, da die Querstrahlen auch eine Trennwirkung auf die einzelnen Schmelzefäden ausüben, so daß es nicht zum Zusammenfließen benachbarter Schmelzeströme kommt. Bei günstiger Anordnung kann auf Nippel an der Unterseite des Tiegels verzichtet werden. Es ist dann wegen der Trennwirkung der Querstrahlen möglich, die Schmelze aus einfachen Bohrungen an einer im wesentlichen ebenen Tiegelunterseite ausströmen zu lassen, ohne daß es zu der bekannten Überflutung der Tiegelunterkante mit Schmelze kommt.

Das erfindungsgemäße Verfahren bewirkt eine intensive Aufspaltung des Schmelzfadens im Ziehdüseneinlauf. Insbesondere bei der Zerfaserung von Mineralfasern werden damit feinere Fasern mit geringerem Anteil an Perlen, dicken Faserstücken und miteinander verklebten Fasern erhalten. Die Faserdurchmesserverteilung der erfindungsgemäß erzeugten Fasern (Mineralwolle) weist eine besonders geringe Verteilungsbreite auf.

Weitere Einzelheiten der Erfindung werden anhand der nachfolgenden Figuren beschrieben.

Die in den Figuren angegebenen Zahlen beschreiben jeweils die folgenden Konstruktions- bzw. Funktionselemente:

1 Schmelzetiegel
2 Mineralschmelze
3 Schmelzeausflußöffnung des Tiegels
4 Schmelzestrom
5 Ziehdüseneinlauf
6 Ausziehteil der Ziehdüse
7 Treibstrahldüse
8 Treibgaskammer
9 Treibgaszufuhrleitung
10 Diffusor
11 Einlaufströmung
12 Querstrahl
13 Gasleitung für Querstrahlen
14 Querstrahldüse

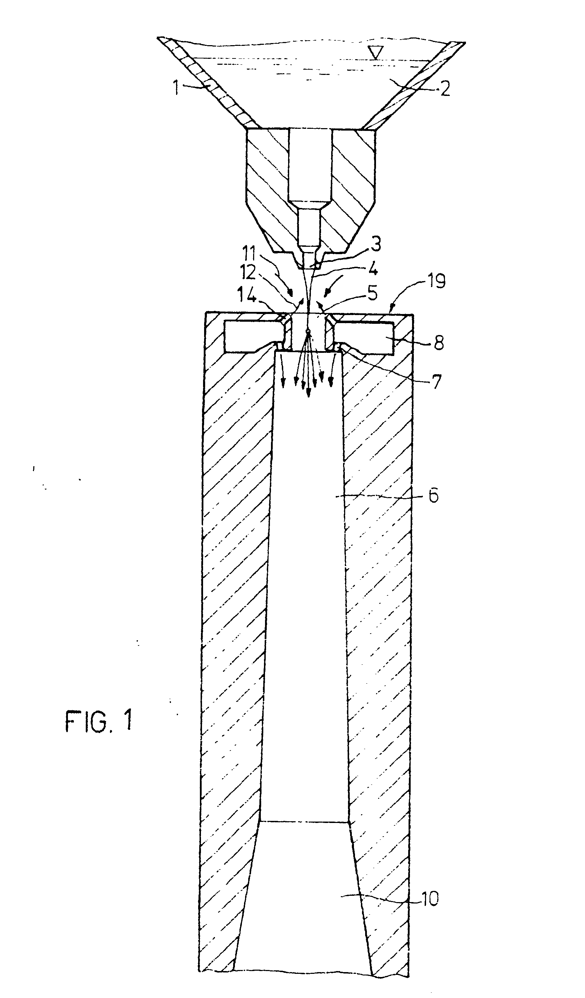

In Fig. 1 ist beispielhaft eine Vorrichtung zur Herstellung von Mineralfasern nach dem Düsenziehverfahren dargestellt. Ein Schmelzetiegel 1 enthält die Mineralschmelze 2. An der Unterseite des Schmelzetiegels befinden sich Schmelzeausflußöffnungen 3, die in Reihe hintereinander angeordnet sind. Aus den Schmelzeausflußöffnungen 3 treten Schmelzeströme 4 aus. Die Schmelzeströme 4 treten in die darunter dargestellte, senkrecht zur Zeichnungsebene schlitzförmige Ziehdüse ein. Die Ziehdüse besteht aus einem Düseneinlauf einem Ausziehteil 6 und einem darunter angeordneten Diffusor 10. Ferner enthält die Ziehdüse Treibstrahldüsen 7, die aus einer Treibgaskammer 8 gespeist werden. Der Treibgaskammer 8 wird über eine nicht gezeichnete Treibgasleitung Druckgas von 3 bis 12 Atmosphären zugeführt. Das Druckgas wird durch die Treibstrahldüsen 7 entspannt. Die durch die Treibstrahldüsen 7 erzeugten Treibstrahlen bewirken einen Unterdruck in der Ziehdüse, so daß aus der Umgebung oberhalb der Ziehdüse Umgebungsluft in die Ziehdüse unter Ausbildung der Einlaufströmung 11 eingesaugt wird.

Unter der Wirkung des Druckgradienten in der Einlaufströmung wird der Schmelzefaden 4 in der Gegend des Düseneinlaufs 5 eine Vielzahl von Einzelfäden aufgespalten, die dann im Ausziehteil der Düse weiter ausgezogen werden. Die Wirkung der Einlaufströmung auf den Schmelzefaden ist nun um so stärker, je größer der Druckgradient längs der Einlaufströmung ist.

Erfindungsgemäß sind nun von der Treibgaskammer 8 zusätzliche Bohrungen 14 vorgesehen, die schräg zur Ziehdüsenachse und nach oben weisen. Durch die Bohrungen 14 treten Querstrahlen 12 aus, die im wesentlichen quer zur Einlaufströmung 11, die sich ohne die Querstrahlen ausbilden würde, verlaufen. In der hier gezeigten Anordnung sind die Bohrungen 14 jeweils beidseitig am Düseneinlauf 5 zwischen je zwei Schmelzeströmen 4 angebracht.

In einer speziellen Anordnung gemäß Fig. 1, bei der der Abstand der Schmelzeaustrittsöffnung 3 vom Ziehdüseneinlauf 5 bis 6 mm beträgt, werden Querstrahlen mit ausreichender Reichweite dann erzeugt, wenn die Querstrahldüsen 14 einen Durchmesser von 0,2 mm aufweisen und der Druck in der Treibgaskammer 8 5 bar beträgt.

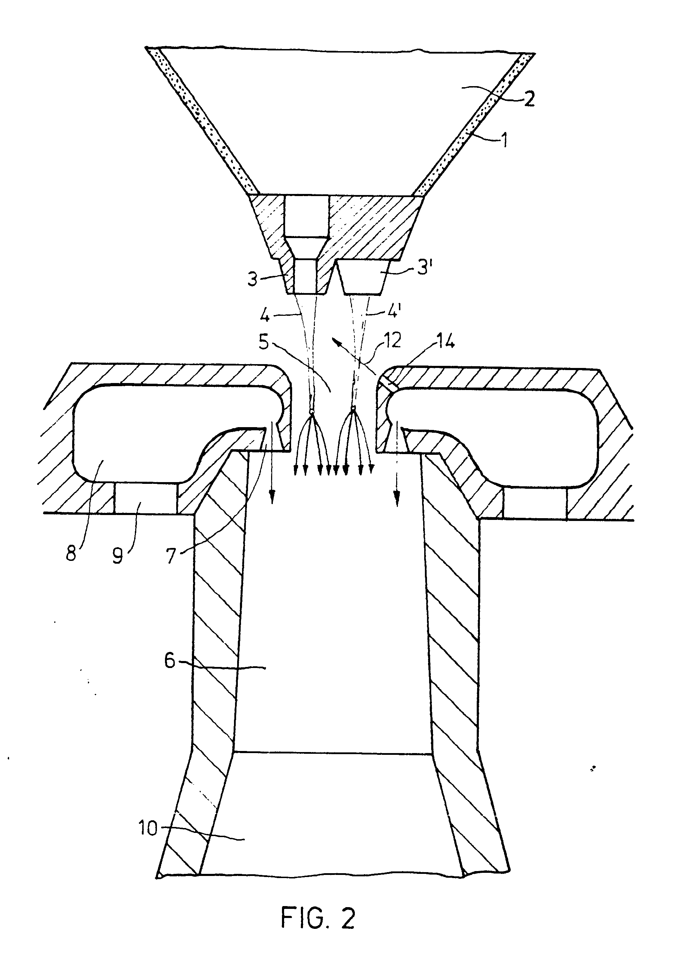

Fig. 2 zeigt eine ähnliche Darstellung wie in Fig. 1 in etwas vergrößerter Form. Der Schmelzetiegel enthält hier an seiner Unterseite eine doppelte, gegeneinander auf Lücke versetzte Nippelreihe 3,3'. Der Querstrahl 12 wird jeweils nur einseitig von der dem Schmelzestrahl 4 bzw. 4' entgegengesetzten Seite der Ziehdüse in die Einlaufströmung eingeblasen.

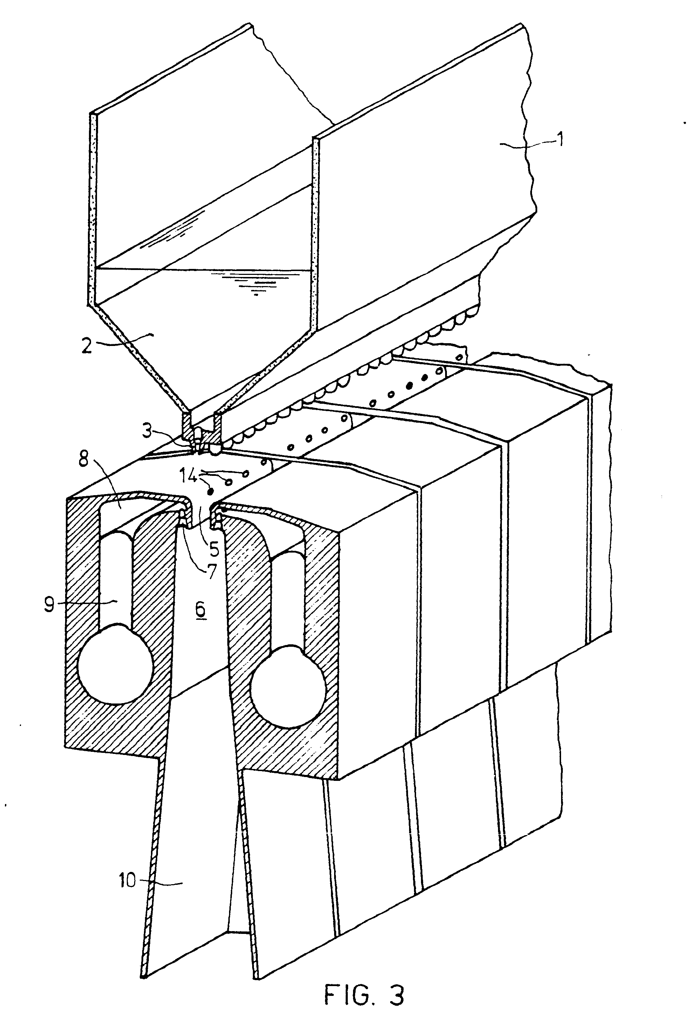

Fig. 3 zeigt eine Anordnung aus Ziehdüse und Schmelzetiegel in perspektivischer Form. An der Unterseite des Schmelzetiegels 1 ist eine Doppelreihe von Schmelzeausflußnippeln 3 und 3' zu erkennen. Erfindungsgemäß enthält die Ziehdüse im Ziehdüseneinlauf 5 die Bohrungen für die Querstrahlen 14, die aus der Treibgaskammer 8 gespeist werden.

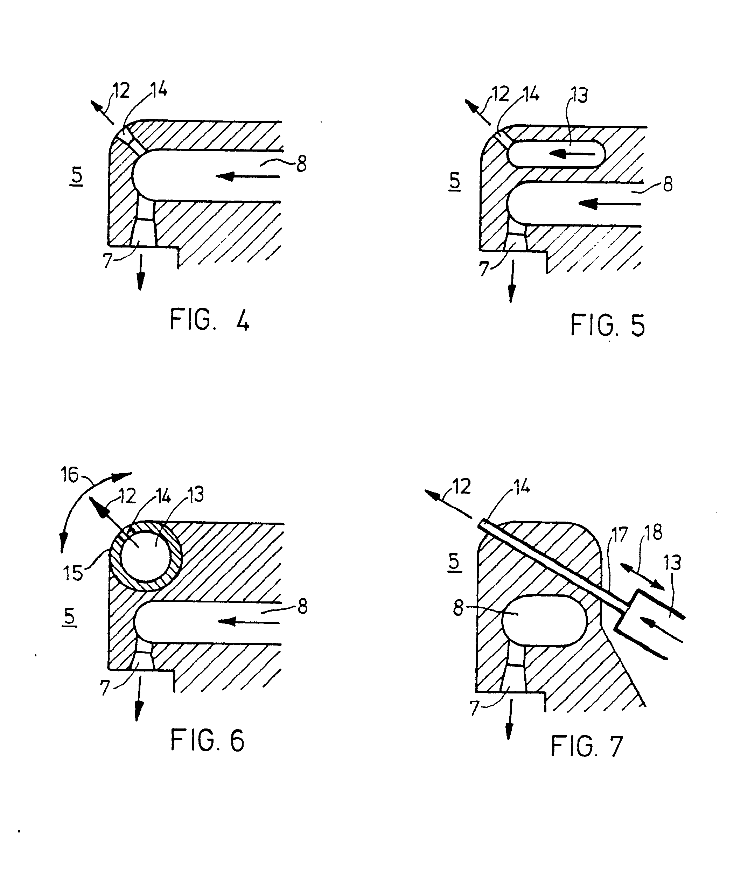

Fig. 4, 5, 6 und 7 zeigen verschiedene Möglichkeiten für die Ausbildung der Querstrahldüsen. Fig. 4 zeigt zunächst in vergrößerter Darstellung jeweils die rechte Hälfte des Düseneinlaufs 5 wie in Fig. 2 und Fig. 3 dargestellt. Querstrahldüse 14 und Treibstrahldüse 7 werden aus der gemeinsamen Treibgaskammer 8 mit Druckgas gespeist, wobei sich der Querstrahl 12 wie durch den Pfeil angegeben, ausbildet. Im Gegensatz zu den Fig. 2 und 3 ist die Querstrahldüse 14 hier als Lavaldüse mit einem sich erweiternden Teil ausgebildet. Die Ausführungsform gemäß Fig. 5 weist eine getrennte Zufuhrleitung 13 für die Querstrahlen 12 auf. Dies erlaubt den Druck in der Querstrahlgaszufuhrleitung 13 unabhängig vom Treibstrahlgasdruck in der Treibgaskammer 8 zu regeln.

In Fig. 6 ist eine Ausführungsform für die Querstrahlgaszufuhrleitung 13 gezeigt, die es erlaubt, die Richtung des Querstrahls 12 zu variieren. Die Querstrahlgaszufuhrleitung 13 besteht hier aus einem in die Einlaufkontur der Ziehdüse eingepaßtem Rohr 15 mit Querstrahldüsen 14. Das Rohr 15 kann um seine Achse gedreht werden, so daß die Richtung des Querstrahls 12 entsprechend dem angezeigten Pfeil 16 variiert werden kann.

Die Ausführungsform der Fig. 7 zeigt ein zu den Fig. 4, 5 und 6 analoges Detail, wobei hier die Querstrahldüse 14 in der Austrittsrichtung des Querstrahls 12 justierbar ist. Dabei enthält die Oberseite der Ziehdüse Bohrungen, in die Röhrchen 17 eingeführt werden können. Die Röhrchen können entlang ihrer Längsachse entsprechend dem eingezeichneten Pfeil 18 verschoben werden. Auf diese Weise können mechanische Strömungshindernisse 17 mit Querstrahlen kombiniert werden. Dabei ist die Verschiebbarkeit des Röhrchens 17 bei gleichbleibendem Betrieb nicht notwendig.

Selbstverständlich kann das Röhrchen 17 auch aus der Treibgaszufuhrleitung 8 gespeist werden, wenn eine getrennte Regelung des Querstrahlgasdruckes und Verschiebbarkeit des Röhrchens 17 nicht erforderlich ist. Die Ausführungsformen nach Figuren 5,6 und 7 sind insbesondere geeignet, wenn das Querstrahlfluid sich vom Treibgas unterscheidet. Beim Einsatz von Wasser als Querstrahlfluidwirkt sich die Kühlwirkung des Wassers als besonders vorteilhaft auf die Lebensdauer der Ziehdüse aus.

Die Fig. 8 bis 13 zeigen bevorzugte relative Anordnungen von Schmelzetiegelaustrittsöffnungen 3 und Querstrahlen 12. Die Figuren 8 bis 12 stellen jeweils eine Aufsicht auf den Düseneinlauf 5 dar, wobei die Schmelzeaustrittsöffnungen in den Düseneinlauf hineinprojiziert sind. Fig. 8 zeigt eine Doppelreihe von Schmelzeaustrittsöffnungen 3 und 3'. Die Querstrahlen 12 weisen jeweils von einer Seite des Düseneinlaufs in Richtung auf die Schmelzeausflußöffnung auf der gegenüberliegenden Seite.

In Fig. 9 ist eine entsprechende Anordnung dargestellt, wobei jeder Querstrahl 12 der Fig. 8 durch zwei im Winkel zueinander verlaufende Querstrahlen 12 ersetzt ist. Dadurch wird die querschnittverengende Wirkung auf den Düseneinlauf 5 und der Druckgradient durch die Querstrahlen noch erhöht.

Fig. 10 zeigt im Gegensatz zu den schlitzförmigen Ziehdüsen gemäß Fig. 8 und Fig. 9 eine kreissymmetrische Ziehdüse. Eine solche Anordnung liegt vor, wenn Fig. 2 als Schnitt durch eine rotationssymmetrische Anordnung genommen wird. Die Querstrahlen sind jeweils zwischen zwei Schmelzeaustrittsöffnungen 3 gerichtet.

Fig. 11 zeigt eine Anordnung von drei Reihen von Schmelzeaustrittsöffnungen 3, wobei die Querstrahlen 11 jeweils auf die Schmelzeströme der mittleren Reihe gerichtet sind.

In Fig. 12 sind die Querstrahlen 11 der Fig. 11 jeweils durch zwei gegeneinander gerichtete Querstrahlen 11 analog Fig. 9 ersetzt.

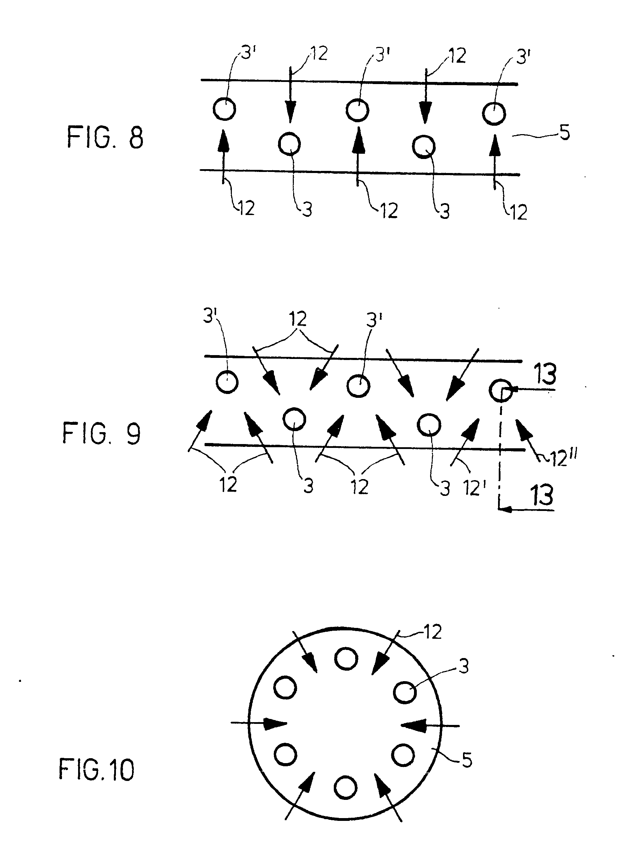

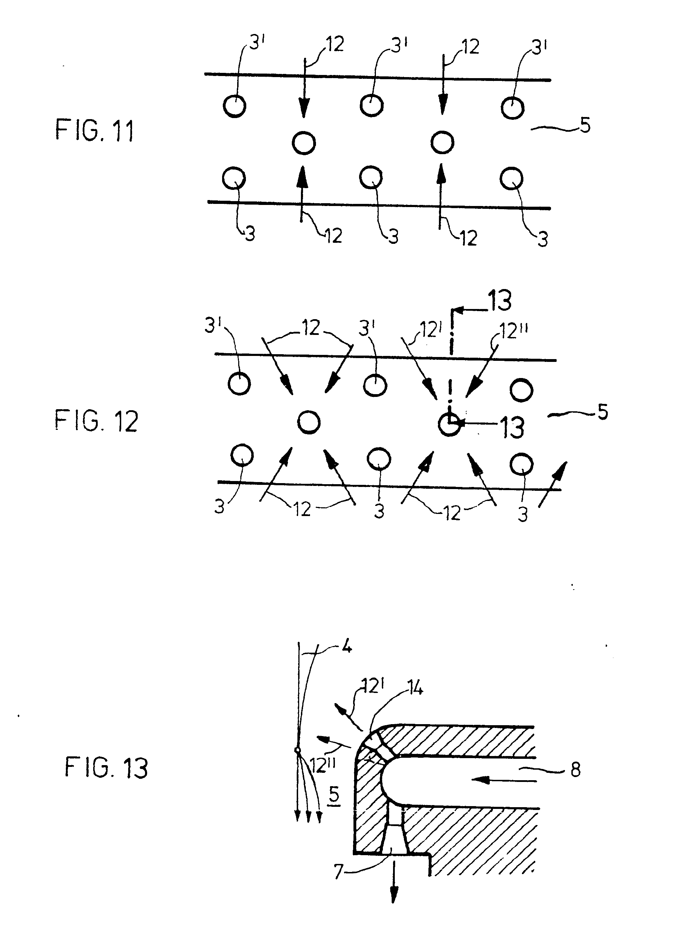

Bei Querstrahlanordungen gemäß Fig. 9 und Fig. 12 können die jeweils paarweise in der Ebene senkrecht zur Ziehdüsenmittelebene gegeneinander gerichteten Querstrahlen 12' und 12'' unterschiedliche Winkel in Richtung auf die Ziehdüsenmittelebene aufweisen, sodaß sie nicht aufeinandertreffen. Dies ist in Fig. 13 dargestellt. Fig. 13 zeigt einen Schnitt aus Fig. 9 bzw. Fig. 12.

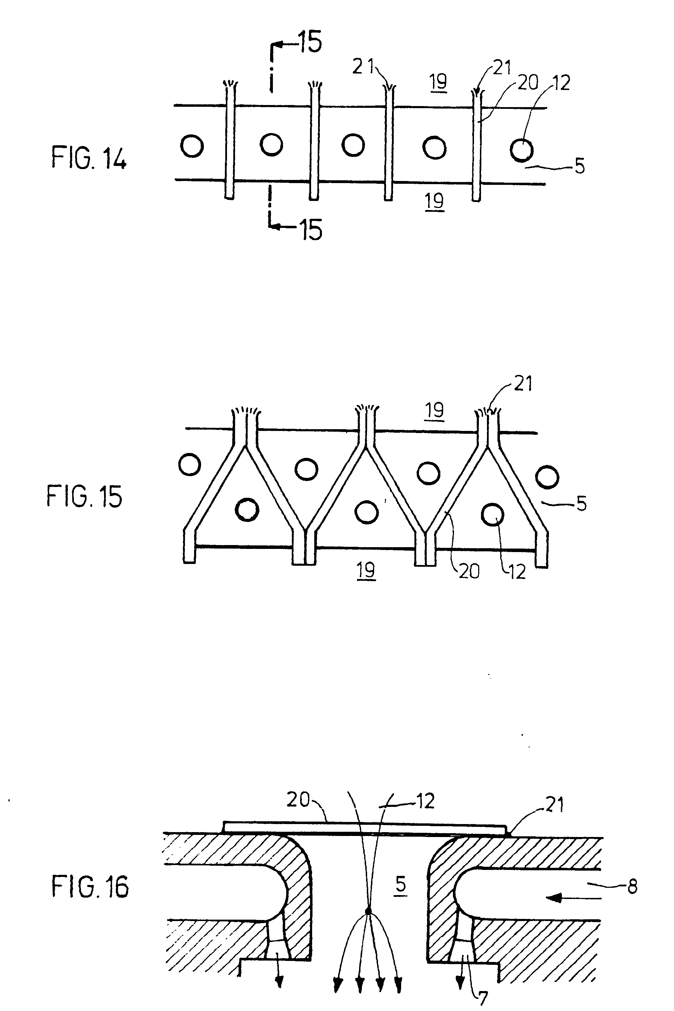

Die Figuren 14, 15 und 16 zeigen Anordungen von mechanischen Strömungshindernissen 20. Fig. 14 und Fig. 15 zeigen Aufsichten auf den Ziehdüseneinlauf 5. Die Ziehdüsenoberseite ist mit 19 bezeichnet, mit 12 die in die Zeichungsebene hineinprojizierten Schmelzeaustrittsöffnungen. Das Strömungshindernis 20 ist ein Blechstreifen, der quer über den schlitzförmige Düseneinlauf 5 verläuft. Der Blechstreifen 20 ist vorzugsweise nur auf einer Seite der Ziehdüse aufgelötet (Lötstelle 21), sodaß die Ziehdüse z.B. beim Anfahren oder zum Reinigen geöffnet werden kann.

Fig. 16 zeigt einen vertikalen Schnitt durch die Ziehdüse gemäß Fig. 14 zur Verdeutlichung der Anordnung des Strömungshindernisses 20.

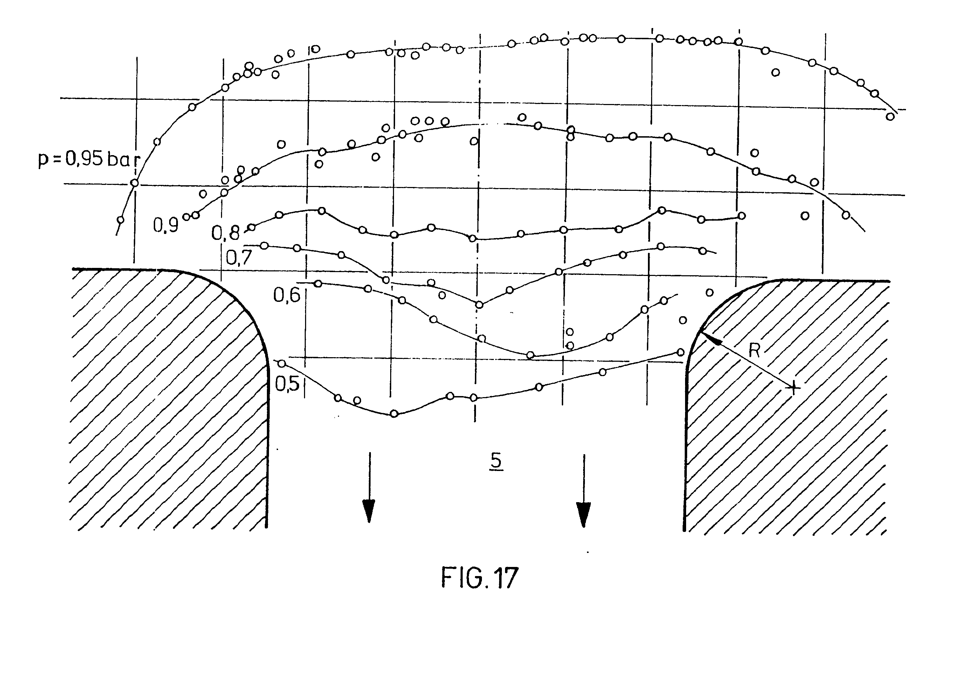

Die Fig. 17, 18 und 19 zeigen Messungen des Druckgefälles im Düseneinlauf einer schlitzförmigen Ziehdüse. Da Druckmessungen bei den tatsächlich für die Zerfaserung eingesetzten Schlitzdüsen mit Schlitzweiten von ca. 4-8 mm sehr schwierig sind wurde ein 6-fach vergrößertes Modell einer solchen Ziehdüse gebaut. In dem Modell hatte die Ziehdüse eine Schlitzbreite von 24 mm und einen Krümmungsradius R der Einlaufkontur der Ziehdüse von 6 mm. Unterhalb der Ziehdüse wurde ein hinreichender Unterdruck erzeugt, so daß an der engsten Stelle der Düse ein Druck von 0,53 bar entstand. Dies entspricht dem Druck, der sich an dieser Stelle bei einer maßstabsgerechten Überschallziehdüse einstellt. Dann wurden mit einer Drucksonde die Isobaren in der Einlaufströmung ausgemessen.

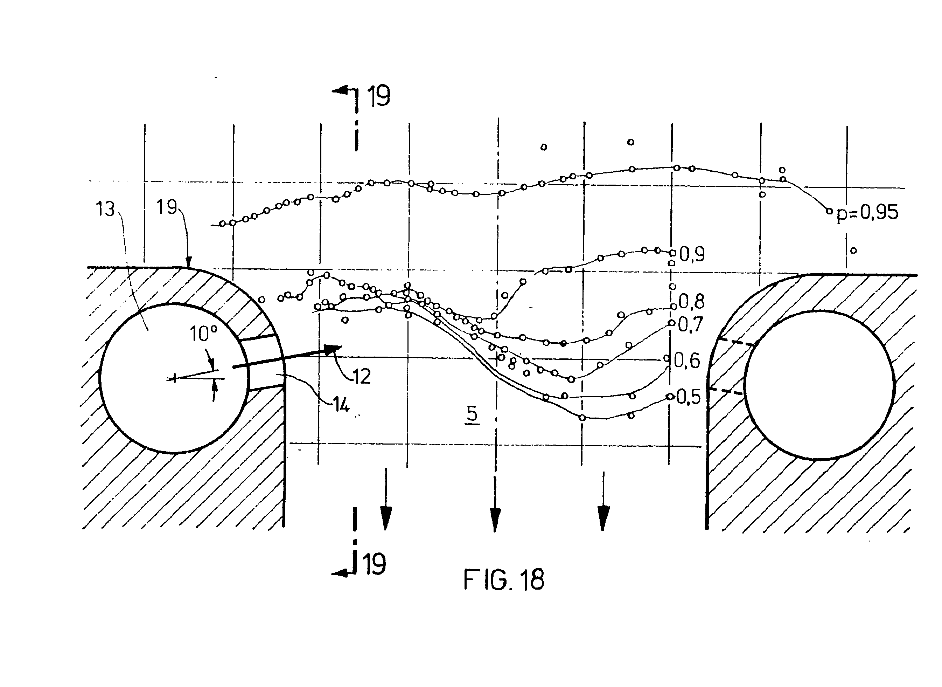

Ohne Querstrahlen ergibt sich das in Fig. 17 dargestellte Isobaren-Profil. Danach wurde eine entsprechende Anordnung mit Querstrahlen vermessen. Anordnung und Meßergebnisse sind in Fig. 18 dargestellt. Die Querstrahlen 12 traten unter einem Winkel von 10° gegen die Richtung senkrecht zur Symmetrieachse der Ziehdüse aus. Die Querstrahlzufuhrleitungen 13 wurden mit einem Druck von 6 bar beaufschlagt. Der Durchmesser der Querstrahldüsen 14 betrug 3 mm.

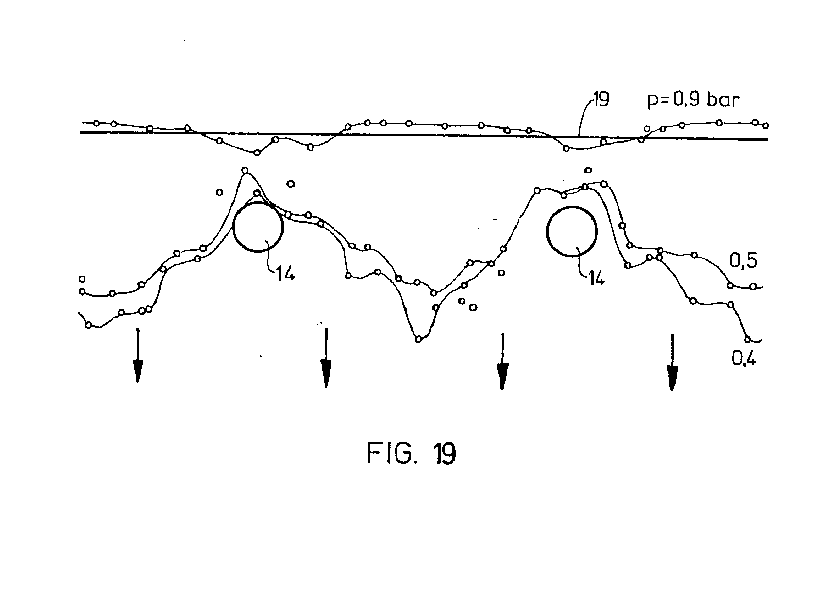

Fig. 19 zeigt einen Längsschnitt durch das Isobarenprofil gemäß Fig. 18 entsprechend der Linie A-A. Die durchgezogene schwarze Linie 19 in Fig. 13 bezeichnet die Oberkante der Ziehdüse gemäß 19 in Fig. 12.

Die Figuren zeigen deutlich den Einfluß der Querstrahlen auf das Druckgefälle im Düseneinlauf. Die tatsächlichen Verhältnisse dürften noch ausgeprägter sein, wenn der heiße Schmelzestrom das Druckprofil zusätzlich beeinflußt.

**Patentansprüche**

1. Verfahren zur Zerteilung von Schmelzen nach dem Düsenziehverfahren, bei dem aus an der Unterseite eines die Schmelze enthaltenden Tiegels (1) angeordneten Schmelzeausflußöffnungen (3) unter der Wirkung der Schwerkraft und zusätzlicher Druckkräfte ausfließende Schmelzeströme (4) bei Hindurchtritt durch eine Ziehdüse (5,6) unter der Wirkung von mit hoher Geschwindigkeit im wesentlichen parallel zu den Schmelzeströmen (4) strömenden Gasen zerteilt, ausgezogen und unter die Erstarrungstemperatur abgekühlt werden, dadurch gekennzeichnet, daß an der Eintrittsöffnung (5) der Ziehdüse im wesentlichen quer zur Richtung der in die Ziehdüse (5,6) eintretenden Gasströmung zur Erhöhung des Druckgradienten ein Fluid (12) unter einem Winkel zwischen 50° entgegen dem Schmelzestrom (4) (-50°) bis 25° in Richtung des Schmelzestromes (4) (+25°) in die Einlaufströmung (11) eingedüst wird.

2. Verfahren nach Anspruch 1, dadurch gekennzeichnet, daß die Fluidstrahlen (12) unter einem Winkel von -30° bis 0° gegen die Richtung senkrecht zur Ziehdüsenmittelebene eingeblasen werden.

3. Verfahren nach Anspruch 1 oder2, dadurch gekennzeichnet, daß das eingedüste Fluid 2 bis 40 Gew.-% des in die Ziehdüse insgesamt eintretenden Gases ausmacht.

4. Verfahren nach Anspruch 3 dadurch gekennzeichnet, daß Gasstrahlen (12) mit einer Reichweite, die dem Abstand der Schmelzeaustrittsöffnung (3) von der Eintrittsöffnung der Ziehdüse (5, 6) etwa entspricht, eingeblasen werden.

5. Verfahren nach einem der Ansprüche 1 bis 4, dadurch gekennzeichnet, daß eine schlitzförmige Ziehdüse (5, 6) eingesetztwird, in die eine Vielzahl von in Reihe angeordneten Schmelzeströmen (4) eintreten und das Gas (12) in den Zwischenraum zwischen zwei Schmelzeströmen jeweils nur von einer Seite der Ziehdüse (5, 6) eingeblasen wird, und zwar bezüglich benachbarter Zwischenräume jeweils von gegenüberliegenden Seiten.

6. Verfahren nach einem der Ansprüche 1 bis 5, dadurch gekennzeichnet, daß eine langgestreckte schlitzförmige Ziehdüse (5, 6) eingesetztwird, in die eine jeweils auf Lücke versetzte Doppelreihe von Schmelzeströmen (4, 4') eintritt und das Gas (12) jeweils von einer Seite der Ziehdüse (5, 6) in Richtung auf einen auf der gegenüberliegenden Seite eintretenden Schmelzestrom gerichtet wird.

7. Vorrichtung zur Zerteilung von Schmelzen nach dem Düsenziehverfahren gemäß den Ansprüchen 1 bis 6, bestehend aus einem die Schmelze enthaltenden Tiegel (1) mit Ausflußöffnungen (3) und einer unterhalb des Tiegels (1) angeordneten Ziehdüse (5, 6), in der eine zum Schmelzestrom (4) parallele Gasströmung aufrechterhalten wird, dadurch gekennzeichnet, daß im Einlauf (5) der Ziehdüse Düsen (14) zur Erzeugung von Fluidstrahlen (12) vorgesehen sind deren Achse zwischen -50° C und +25° C gegen die Senkrechte auf die Ziehdüsenmittelebene verläuft.

## Claims

1. Process for dividing melts by the nozzle drawing process, in which melt streams (4), which, under the effect of gravity and additional pressure forces, flow out of melt outflow openings (3) arranged at the lower end of a crucible (1) containing the melt, are divided, draw, out and cooled to below the temperature of solidification on passing through a drawing nozzle (5, 6) under the effect of gases flowing at a high speed in a substantially parallel direction to the melt streams (4), characterised in that, at the inlet opening (5) of the drawing nozzle (5,6) and substantially transversely to the direction of the gas current entering the drawing nozzle (5, 6), a fluid (12) is nozzleinjected into the inflow current (11), to increase the pressure gradient, at an angle of between 50 in the opposite direction to the melt stream (4) (-50°) and 25° in the direction of the melt stream (4) (+25°).

2. Process according to Claim 1, characterised in that the fluid jets (12) are blown in at an angle of -30° to 0° with respect to the direction perpendicular to the central plane of the drawing nozzle.

3. Process according to Claim 1 or 2, characterised in that the nozzle-injected fluid constitutes 2 to 40% by weight of the total quantity of gas entering the drawing nozzle.

4. Process according to Claim 3, characterised in that gas jets (12) are blown in which have a range approximately corresponding to the distance between the melt outflow opening (3) and the inlet opening of the drawing nozzle (5, 6).

5. Process according to one of Claims 1 to 4, characterised in that a slit-shaped drawing nozzle (5, 6) is used into which a plurality of melt streams (4) arranged in a row enter and the gas (12) is blown into the intermediate space between two mmelt streams in each case only from one side of the drawing nozzle (5, 6), that is, with respect to adjacent intermediate spaces, in each case from opposite sides.

6. Process according to one of Claims 1 to 5, characterised in that an extended slit-shaped drawing nozzle (5, 6) is used into which an, in each case, staggered double row of melt streams (4, 4') enters and the gas (12) is directed, in each case from one side of the drawing nozzle (5, 6) towards one of the melt streams entering on the opposite side.

7. Apparatus for dividing melts by the nozzle drawing process according to Claims 1 to 6, consisting of a crucible (1) with outflow openings (3) which contains the melt and a drawing nozzle (5, 6) arranged beneath the crucible (1), in which nozzle a gas current parallel to the melt stream (4) is maintained, characterised in that in the inlet (5) of the drawing nozzle nozzles (14) are provided for the production of jets of fluid (12), whose axes lie at between -50°C and +25°C with respect to the perpendicular on to the central plane of the drawing nozzle.

## Revendications

1. Procédé de subdivision d'une masse fondue par le procédé d'étirage à partir d'une filière, dans lequel à partir d'orifices de sortie de masse fondue (3) agencés sur le côté inférieur d'un creuset (1) contenant la masse fondue, sous l'action de la pesanteur et de forces de compression additionnelles, les courants de masse fondue sortants (4) sont subdivisés par passage à travers une filière d'étirage (5, 6) sous l'action de gaz circulant à vitesse élevée essentiellement parallèlement aux courants de masse fondue (4), sont étirés et sont refroidis au-dessous de la température de solidification, caractérisé en ce qu'à l'ouverture d'entrée (5) de la filière d'étirage on injecte essentiellement transversalement à la direction du courant de gaz entrant dans la filière d'étirage (5, 6), en vue d'augmenter le gradient de pression, un fluide (12) sous un angle entre 50° en sens contraire du courant de masse fondue (4) (-50°) jusqu'à 25° dans la direction du courant de masse fondue (4) (+25°) dans le courant d'entrée (11).

2. Procédé selon la revendication 1, caractérisé en ce que les jets de fluide (12) sont injectés sous un angle de -30°C à 0° contrairement à la direction, perpendiculairement au plan central de la filière d'étirage.

3. Procédé selon la revendication 1 ou 2, caractérisé en ce que le fluide injecté représente 2 à 40% en poids du gaz qui entre en tout dans la filière d'étirage.

4. Procédé selon la revendication 3, caractérisé en ce qu'on injecte des jets gazeux (12) ayant une portée qui correspond sensiblement à l'écartement de l'orifice de sortie de masse fondue (3) par rapport à l'orifice d'entrée de la filière d'étirage (5, 6).

5. Procédé selon l'une des revendications 1 à 4, caractérisé en ce qu'on utilise une filière d'étirage en forme de fente (5, 6), dans laquelle un grand nombre de courants de masse fondue (4) arrangés en série pénètrent et en ce qu'on injecte le gaz (12) dans l'espace intermédiaire entre deux courants de masse fondue, chaque fois d'un seul côté de la filière d'étirage (5, 6) et cela chaque fois à partir des côtés opposés par rapport aux espaces intermédiaires voisins.

6. Procédé selon l'une des revendications 1 à 5, caractérisé en ce qu'on utilise une filière d'étirage (5, 6) en forme de fente à extension longitudinale, dans laquelle pénètre une double rangée de courants de masse fondue (4, 4') décalée chaque fois par rapport à l'interstice et en ce que le gaz (12), chaque fois d'un côté de la filière d'étirage (5, 6) est dirigé sur un courant de masse fondue entrant sur le côté opposé.

7. Dispositif pour la subdivision d'une masse fondue par le procédé d'étirage à partir d'une filière selon les revendications 1 à 6, consistant en un creuset (1) contenant la masse fondue et avec orifices d'écoulement (3), et en une filière d'étirage (5, 6) installée au-dessous du creuset (1) dans laquelle est entretenu un courant de gaz parallèle au courant de la masse fondue (4), caractérisé en ce que dans l'entrée (5) de la filière d'étirage sont prévues des tuyères (14) pour la production de jets de fluide (12) dont l'axe fait un angle compris entre -50° et +25° par rapport à la verticale sur le plan central de la filière d'étirage.

FIG. 1

FIG. 2

FIG. 3

FIG. 4

FIG. 5

FIG. 6

FIG. 7

FIG. 8

FIG. 9

FIG. 10

FIG. 11

FIG. 12

FIG. 13

FIG. 14

FIG. 15

FIG. 16

FIG.17

p = 0,95 bar

0,9
0,8
0,7
0,6
0,5

R

5

FIG. 18

FIG. 19

p = 0,9 bar

19

14

14

0,5

0,4

0 119 426